(19) Europäisches Patentamt
European Patent Office
Office européen des brevets

(11) EP 4 442 750 A1

(12) **EUROPEAN PATENT APPLICATION**
published in accordance with Art. 153(4) EPC

(43) Date of publication:
**09.10.2024 Bulletin 2024/41**

(21) Application number: **22927302.4**

(22) Date of filing: **24.11.2022**

(51) International Patent Classification (IPC):
***C08K 7/04*** *(2006.01)* ***C08L 81/04*** *(2006.01)*
***B29C 65/16*** *(2006.01)*

(52) Cooperative Patent Classification (CPC):
**B29C 65/16; C08K 7/04; C08L 81/04**

(86) International application number:
**PCT/JP2022/043262**

(87) International publication number:
**WO 2023/157411 (24.08.2023 Gazette 2023/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **17.02.2022 JP 2022022788**

(71) Applicant: **DIC Corporation**
**Tokyo 174-8520 (JP)**

(72) Inventors:
- **YAMADA, Keisuke**
  **Ichihara-shi**
  **Chiba 290-8585 (JP)**
- **DEGUCHI, Yuki**
  **Ichihara-shi**
  **Chiba 290-8585 (JP)**

(74) Representative: **Kraus & Lederer PartGmbB**
**Thomas-Wimmer-Ring 15**
**80539 München (DE)**

# (54) POLYARYLENE SULFIDE RESIN COMPOSITION, MOLDED ARTICLE, AND PRODUCTION METHODS FOR SAME

(57) Provided are a polyarylene sulfide resin molded article for laser welding having excellent laser transmissivity and welding strength in laser welding, a resin composition capable of forming the molded article, and production methods for the same. More specifically, in a polyarylene sulfide resin composition for laser welding containing a polyarylene sulfide resin, a weight average molecular weight of the polyarylene sulfide resin is less than 40,000, and a linear growth rate of crystals of the polyarylene sulfide resin is 10 μm/min or less.

[Fig. 1]

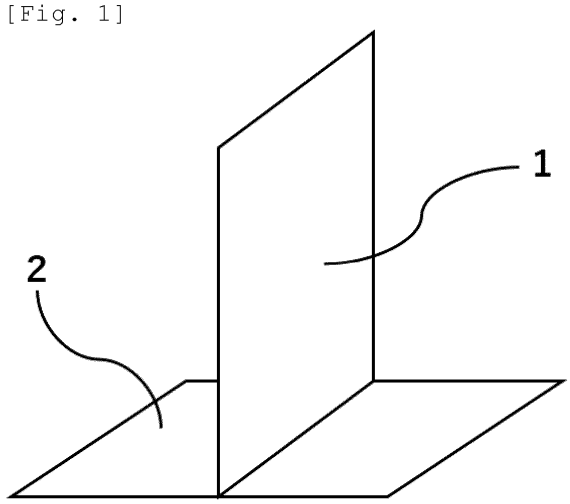




Processed by Luminess, 75001 PARIS (FR)

## Description

Technical Field

The present invention relates to a polyarylene sulfide resin composition, a polyarylene sulfide resin molded article, and production methods for the same.

Background Art

In recent years, an engineering plastic having excellent productivity and moldability and high heat resistance has been developed. Since the engineering plastic is also lightweight, the engineering plastic is widely used instead of a metal material for electric and electronic apparatuses and members of automobiles. In particular, a polyarylene sulfide (hereinafter abbreviated as PAS) resin typified by a polyphenylene sulfide (hereinafter abbreviated as PPS) resin has high heat resistance and excellent mechanical strength, chemical resistance, molding processability, and dimensional stability. Therefore, the PAS resin has been widely used in the fields of various automobile parts, electric and electronic parts, parts used in a wet area, and the like.

Techniques for welding and combining the parts include infrared welding, vibration welding, ultrasonic welding, and the like. In particular, a laser welding method has attracted attention in recent years in terms of high degree of freedom of design, less damage to a product from heat and vibration involved in welding, a simple welding process, and less environmental impact. However, a PAS resin generally has low laser transmissivity, and therefore irradiation with a high-power laser beam is required for an increase in welding strength. As a result of the irradiation, there is a problem in that black spots (burnt spots, etc.) are generated in the resin, and the black spots cause further interference with laser transmission.

In order to solve this problem, use of a resin composition including a PPS resin having a weight average molecular weight of 40,000 to 80,000 has been proposed (see PTL 1) by which the sizes of spherulites formed in a molded article are made smaller than the wavelength of a laser beam to improve laser transmissivity.

Citation List

Patent Literature

PTL 1: Japanese Unexamined Patent Application Publication No. 2006-168221

Summary of Invention

Technical Problem

However, resin molded articles obtained by these methods have insufficient laser transmissivity, and a further improvement is required.

An object of the present invention is to provide a PAS resin molded article for laser welding having excellent laser transmissivity and welding strength in laser welding, a PAS resin composition capable of forming the molded article, and production methods for the same.

Solution to Problem

The inventors of the present invention have intensively studied to solve the aforementioned problems, and as a result found that by using a PAS resin having a weight average molecular weight of a specific range and a linear growth rate of crystals of a specific range, a PAS resin molded article achieves excellent laser transmissivity and welding strength in laser welding. Thus, the present invention has been completed.

That is, a PAS resin composition for laser welding of the present disclosure is characterized in that the weight average molecular weight of a PAS resin (A) is less than 40,000, and the linear growth rate of crystals of the PAS resin (A) is 10 gm/min or less. Due to the aforementioned configuration, the PAS resin composition is excellent in laser transmissivity and welding strength in laser welding.

A molded article of the present disclosure is formed by melt-molding the PAS resin composition for laser welding described above.

A laser welded body of the present disclosure is formed using the molded article described above.

A method for producing the PAS resin composition for laser welding of the present disclosure is a method for producing a PAS resin composition for laser welding including a step of mixing a PAS resin (A) and melt-kneading the

PAS resin (A) at a temperature range equal to or higher than the melting point of the PAS resin (A), in which the weight average molecular weight of the PAS resin (A) is less than 40,000, and the linear growth rate of crystals of the PAS resin (A) is 10 gm/min or less.

The linear growth rate of crystals of a resin in the present disclosure represents the linear growth rate in a radius direction of spherulites of the resin.

Advantageous Effects of Invention

The present invention can provide a PAS resin molded article for laser welding that contains a PAS resin (A) and has excellent laser transmissivity and welding strength in laser welding, a PAS resin composition capable of forming the molded article, and production methods for the same.

Brief Description of Drawings

FIG. 1 is a schematic diagram of a test piece used in a laser welding strength test in Examples. A laser adsorption-side test piece is represented by 1, and a laser transmission-side test piece is represented by 2.

FIG. 2 is a schematic diagram of an aluminum support plate used in the laser welding strength test in Examples.

FIG. 3 is a schematic diagram of a combination of the test piece with the support plate used in the laser welding strength test in Examples. The laser adsorption-side test piece is represented by 1, and the laser transmission-side test piece is represented by 2, and the aluminum support plate is represented by 3.

Description of Embodiments

Hereinafter, an embodiment of the present invention will be described in detail, but the scope of the present invention is not limited to the embodiment herein, and various modification may be made without departing from the spirit of the present invention. When a plurality of upper limit values and a plurality of lower limit values of a specific parameter are described, a suitable numerical value range can be obtained by combining any upper limit value and any lower limit value among the upper limit values and the lower limit values.

A PAS resin composition for laser welding according to the embodiment is a PAS resin composition for laser welding containing a PAS resin (A), in which the weight average molecular weight of the PAS resin (A) is less than 40,000, and the linear growth rate of crystals of the PAS resin (A) is 10 $\mu$m/min or less. This will be described below.

<PAS Resin (A)>

The PAS resin composition according to the embodiment contains a PAS resin as an essential component.

The PAS resin has a resin structure containing as a repeating unit a structure in which an aromatic ring is bonded to a sulfur atom. Specifically, the PAS resin is a resin containing as a repeating unit a structural moiety represented by the following general formula (1):

[Chemical Formula 1]

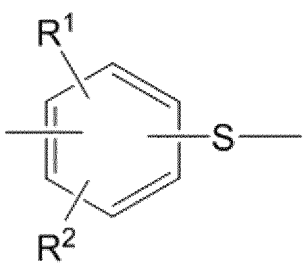

Formula (1)

(wherein $R^1$ and $R^2$ are each independently a hydrogen atom, an alkyl group having 1 to 4 carbon atoms, a nitro group, an amino group, a phenyl group, a methoxy group, or an ethoxy group), and if necessary, a trifunctional structural moiety represented by the following general formula (2):

[Chemical Formula 2]

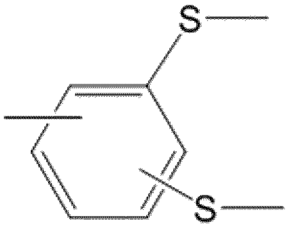

Formula (2)

as repeating units. The amount of the trifunctional structural moiety represented by the formula (2) is preferably within the range of 0.001 to 3% by mole, and particularly preferably within the range of 0.01 to 1% by mole, relative to the total number of moles of other structural moieties.

Herein, the structural moiety represented by the formula (1), especially $R^1$ and $R^2$ in the formula are preferably a hydrogen atom in terms of mechanical strength of the PAS resin. In this case, examples of the structural moiety include a structural moiety represented by the following formula (3) and having bonds at para positions and a structural moiety represented by the following formula (4) and having bonds at meta positions.

[Chemical Formula 3]

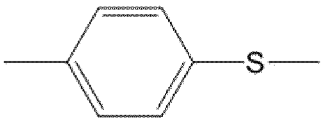

Formula (3)

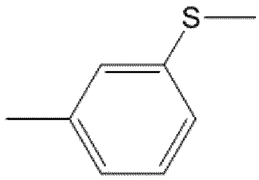

Formula (4)

In particular, the structural moiety represented by the general formula (3) in which a bond of the aromatic ring to the sulfur atom in the repeating unit is a bond at a para position is preferable in terms of heat resistance and crystallinity of the PAS resin.

The PAS resin may contain not only the structural moieties represented by the formulae (1) and (2), but also structural moieties represented by the following structural formulae (5) to (8):

[Chemical Formula 4]

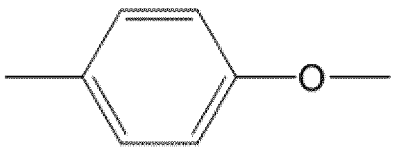

Formula (5)

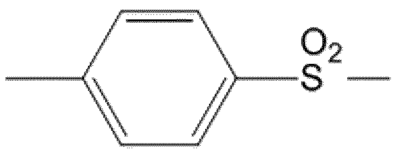

Formula (6)

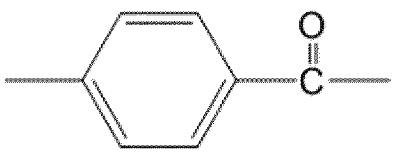

Formula (7)

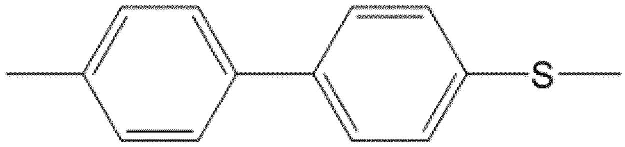

Formula (8)

in an amount of 30% by mole or less relative to the total amount of the structural moieties represented by the formulae (1) and (2). In particular, in the present invention, it is preferable that the amount of the structural moieties represented by the general formulae (5) to (8) be 10% by mole or less in terms of heat resistance and mechanical strength of the PAS resin. When the PAS resin contains the structural moieties represented by the general formulae (5) to (8), the structural moieties may be bonded at any pattern to form any of a random copolymer or a block copolymer.

The molecular structure of the PAS resin may have a naphthyl sulfide bond and the like, and the amount thereof is preferably 3% by mole or less, and particularly preferably 1% by mole or less, relative to the total amount of the molecular structure and another structural moiety.

The physical properties of the PAS resin are not particularly limited as long as they do not impair the effects of the present invention, and are as described below.

(Weight Average Molecular Weight)

The weight average molecular weight of the PAS resin used for the PAS resin composition according to the embodiment is not particularly limited, and the upper limit thereof is preferably 40,000 or less, and more preferably 30,000 or less in terms of excellent crystallization. In contrast, the lower limit thereof is preferably 10,000 or more, more preferably 12,500 or more, and further preferably 15,000 or more, from the viewpoint of mechanical strength and moldability. The weight average molecular weight of the PAS resin in the present disclosure is a weight average molecular weight determined using gel permeation chromatography under the following measurement conditions. In calibration, six types of monodisperse polystyrenes are used.

Device: ultra-high temperature polymer molecular weight distribution analyzer ("SSC-7000" manufactured by Senshu Scientific Co., Ltd.)
Column: UT-805L (manufactured by Showa Denko K.K.)
Column temperature: 210°C
Solvent: 1-chloronaphthalene
Measurement method: UV detector (360 nm)

(Linear Growth Rate of Crystals)

The linear growth rate of crystals of the PAS resin used for the PAS resin composition according to the embodiment is preferably 10 μm/min or less, more preferably 8 m/min or less, and further preferably 5 μm/min or less since laser transmissivity and mechanical strength are improved. The linear growth rate of crystals is more preferably 1 μm/min or more. In such a range, the PAS resin is excellent in crystallization characteristics, and therefore favorable moldability, laser transmissivity, and mechanical strength are achieved. The linear growth rate of crystals of the PAS resin in the present disclosure is measured using a polarized light microscope. The PAS resin is melted at 350°C for 3 minutes, quenched to 250°C at 30°C/min, and held at 250°C, to produce crystals, the crystals are further held at 250°C, and a growth rate is calculated from the radius of the crystals every minute until 15 minutes elapse. The average value of the obtained growth rates is the linear growth rate of crystals. As the polarized light microscope, a commercially available polarized light microscope can be used, and examples thereof include "OPTIPHOT-POL" manufactured by Nikon Corporation.

(Melt Viscosity)

The melt viscosity of the PAS resin used for the PAS resin composition according to the embodiment is not particularly limited. The melt viscosity (V6) measured at 300°C is preferably 1 Pa·s or more, and preferably 1,000 Pa·s or less, more preferably 500 Pa·s or less, and further preferably 200 Pa·s or less since flowability and mechanical strength are well balanced. In the measurement of the melt viscosity (V6), a flow tester CFT-500D manufactured by Shimadzu Corporation is used for the PAS resin. The melt viscosity is a value measured after the PAS resin is held at 300°C, a load of 1.96 $\times$ $10^6$ Pa, and a L/D of 10 (mm) /1 (mm) for 6 minutes.

(Non-Newtonian Index)

The non-Newtonian index of the PAS resin used for the PAS resin composition according to the embodiment is not particularly limited, and is preferably within the range of 0.90 or more and 2.00 or less. In the present invention, the non-Newtonian index (N value) is a value calculated by the following equation from a shear rate (SR) and a shear stress (SS) that are measured using Capilograph under conditions of a melting point plus 20°C and a ratio L/D of an orifice length (L) to an orifice diameter (D) of 40. As the non-Newtonian index (N value) is closer to 1, the structure is closer to a linear shape. As the non-Newtonian index (N value) is higher, the structure is more branched.

[Equation 1]

$$SR = K \cdot SS^{N}$$

(wherein SR represents a shear rate ($s^{-1}$), SS represents a shear stress ($dyn/cm^2$), and K is a constant.)

(Production Method)

A method for producing the PAS resin is not particularly limited, and examples thereof include: (method 1) a method in which a dihaloaromatic compound, and if necessary, a polyhaloaromatic compound or another copolymerization component are polymerized in the presence of sulfur and sodium carbonate; (method 2) a method in which a dihaloaromatic compound, and if necessary, a polyhaloaromatic compound or another copolymerization component are polymerized in a polar solvent in the presence of sulfide-forming agent and the like; (method 3) a method for self-condensing p-chlorothiophenol, with another copolymerization component if necessary; and (method 4) a method in which a diiodo aromatic compound and a simple substance sulfur are melt-polymerized under reduced pressure in the presence of a polymerization inhibitor that may have a functional group such as a carboxy group and an amino group. Among these methods, the method 2 is preferred since it is widely used. During a reaction, an alkali metal salt of carboxylic acid or sulfonic acid, or an alkali hydroxide may be added to adjust the degree of polymerization. The PAS resin obtained by the method 2, especially a method in which a water-containing sulfide-forming agent is introduced into a mixture containing a heated organic polar solvent and a dihaloaromatic compound at a speed at which water can be removed from a reaction mixture, and if necessary, a polyhaloaromatic compound is added, the dihaloaromatic compound and the sulfide-forming agent are reacted in the organic polar solvent, and the amount of water in the reaction system is controlled within the range of 0.02 to 0.5 mol relative to 1 mol of the organic polar solvent to produce the PAS resin (see Japanese Unexamined Patent Application No. H07-228699) or a method in which a dihaloaromatic compound, and if necessary, a polyhaloaromatic compound or another copolymerization component are reacted with an alkali metal hydrosulfide and an alkali metal salt of an organic acid in the presence of a solid alkali metal sulfide and an aprotic polar organic solvent while the amount of the alkali metal salt of an organic acid is controlled within the range of 0.01 to 0.9 mol relative to 1 mole of sulfur source and the amount of water in the reaction system is controlled to be 0.02 mol or less relative to 1 mol of the aprotic polar organic solvent (see WO2010/058713) is particularly preferred. Specific examples of the dihaloaromatic compound include p-dihalobenzene, m-dihalobenzene, o-dihalobenzene, 2,5-dihalotoluene, 1,4-dihalonaphthalene, 1-methoxy-2,5-dihalobenzene, 4,4'-dihalobiphenyl, 3,5-dihalobenzoic acid, 2,4-dihalobenzoic acid, 2,5-dihalonitrobenzene, 2,4-dihalonitrobenzene, 2,4-dihaloanisole, p,p'-dihalodiphenyl ether, 4,4'-dihalobenzophenone, 4,4',-dihalodiphenyl sulfone, 4,4',-dihalodiphenyl sulfoxide, 4,4'-dihalodiphenyl sulfide, and compounds having an alkyl group having 1 to 18 carbon atom on the aromatic ring of any of the aforementioned compounds. Examples of the polyhaloaromatic compound include 1,2,3-trihalobenzene, 1,2,4-trihalobenzene, 1,3,5-trihalobenzene, 1,2,3,5-tetrahalobenzene, 1,2,4,5-tetrahalobenzene, and 1,4,6-trihalonaphthalene. A halogen atom contained in the aforementioned compounds is desirably a chlorine atom or a bromine atom.

A method for post-treating a reaction mixture containing the PAS resin obtained by a polymerization step is not particularly limited. Examples thereof include (post-treatment 1) a method in which after completion of a polymerization reaction, a solvent is distilled off under reduced pressure or normal pressure from the reaction mixture as it is or after addition of an acid or a base, a solid material after distillation of the solvent is washed with a solvent such as water, the reaction solvent (or an organic solvent having the same solubility in a low molecular weight polymer), acetone, methyl ethyl ketone, and an alcohol, one or two or more times, followed by neutralization, water-washing, filtration, and drying; (post-treatment 2) a method in which after completion of a polymerization reaction, a solvent (a solvent that is soluble in the solvent used for polymerization and is a poor solvent to at least PAS resin) such as water, acetone, methyl ethyl ketone, an alcohol, an ether, a halogenated hydrocarbon, an aromatic hydrocarbon, and an aliphatic hydrocarbon is added as a precipitating agent, to precipitate the PAS resin and a solid product such as an inorganic salt, and they are

filtered off, washed with water, and dried; (post-treatment 3) a method in which after completion of a polymerization reaction, a reaction solvent (or an organic solvent having the same solubility in a low molecular weight polymer) is added to the reaction mixture and then stirred, the low molecular weight polymer is removed by filtration, and the resultant is washed with a solvent such as water, acetone, methyl ethyl ketone, and an alcohol, one or two or more times, followed by neutralization, water-washing, filtration, and drying; (post-treatment 4) a method in which after completion of a polymerization reaction, water is added to wash the reaction mixture, and if necessary, an acid or a base is added to treat the reaction mixture during water-washing, followed by filtration and drying; and (post-treatment 5) a method in which after completion of a polymerization reaction, the reaction mixture is filtered, and if necessary, washed with the reaction solvent one or two or times, and then washed with water, followed by filtration and drying. All the post-treatment methods can control the reactivity and crystallization rate of the PAS resin, a sodium content, and the like by pH adjustment using the added acid or base in a water-washing step, and can control the pH after a hot-water-washing step within the range of 6.5 to 11.5, and more preferably within the range of 6.5 to 8.5.

In the post-treatment method described in the posttreatments 1 to 5, the PAS resin may be dried in vacuum, in an air, or in an inert gas atmosphere such as nitrogen.

<Glass Fibers (B)>

The PAS resin composition according to the embodiment may further contain glass fibers (B). Due to the contained glass fibers (B), the mechanical strength and moldability of a PAS molded article can be enhanced.

As a material for the glass fibers (B) used for the PAS resin composition according to the embodiment, a material publicly known to those skilled in the art is usable, and the fiber diameter, fiber length, aspect ratio, and the like of the material is adjustable as appropriate according to use applications of a molded article, and the like.

As the glass fibers (B) used for the PAS resin composition according to the embodiment, glass fibers processed with a surface treatment agent or a sizing agent can be used. This is preferred since the adhesion force to the PAS resin can be enhanced. Examples of the surface treatment agent or the sizing agent include at least one type of polymer selected from the group consisting of a silane compound, a titanate compound, an acrylic resin, a urethane resin, a polyether resin, and an epoxy resin having a functional group such as an amino group, an epoxy group, an isocyanate group, or a vinyl group. From the viewpoint of preventing excess defibration during processing, the surface treatment agent or the sizing agent containing a urethane resin is particularly preferred. When the surface treatment agent or the sizing agent contains a urethane resin, the content of the urethane resin is not particularly limited, and from the viewpoint of resistance to fuel swelling, the content is preferably 35% by mass or less, and more preferably 20% by mass or less.

When the glass fibers (B) are added, the amount of the glass fibers (B) mixed is preferably 40 parts by mass or less, more preferably 30 parts by mass or less, and further preferably 20 parts by mass or less, relative to 100 parts by mass of the PAS resin (A) from the viewpoint of laser transmissivity. From the viewpoint of achieving more excellent mechanical strength, the amount is preferably 1 part by mass or more, more preferably 3 parts by mass or more, and further preferably 5 parts by mass or more, relative to 100 parts by mass of the PAS resin (A).

<Additional Component>

The PAS resin composition according to the embodiment may contain as an optional component a filler other than the glass fibers (B) (hereinafter referred to as other filler), if necessary. As the other filler, a commonly known material can be used as long as it does not impair the effects of the present invention. Examples thereof include fillers having various shapes, such as particulate, platelike, and fibrous fillers. For example, a filler such as a glass bead, a glass flake, barium sulfate, clay, pyrophyllite, bentonite, sericite, mica, talc, attapulgite, ferrite, calcium silicate, calcium carbonate, a glass bead, zeolite, a milled fiber, or calcium sulfate can also be used.

The PAS resin composition according to the embodiment may contain as an optional component a silane-coupling agent, if necessary. The silane-coupling agent is not particularly limited as long as it does not impair the effects of the present invention. Preferable examples of the silane-coupling agent include a silane-coupling agent having a functional group to be reacted with a carboxy group, such as an epoxy group, an isocyanato group, an amino group, or a hydroxyl group. Examples of such a silane-coupling agent include an epoxy group-containing alkoxysilane compound, such as γ-glycidoxypropyltrimethoxysilane, γ-glycidoxypropyltriethoxysilane, and β-(3,4-epoxycyclohexyl)ethyltrimethoxysilane, an isocyanato group-containing alkoxysilane compound, such as γ-isocyanatepropyltrimethoxysilane, γ-isocyanatepropyltriethoxysilane, γ-isocyanatepropylmethyldimethoxysilane, γ-isocyanatepropylmethyldiethoxysilane, γ-isocyanatepropylethyldimethoxysilane, γ-isocyanatepropylethyldiethoxysilane, and γ-isopropyltrichlorosilane, an amino group-containing alkoxysilane compound, such as γ-(2-aminoethyl)aminopropylmethyldiethoxysilane, γ-(2-aminoethyl)aminopropyltrimethoxysilane, and γ-aminopropyltrimethoxysilane, and a hydroxyl group-containing alkoxysilane compound, such as γ-hydroxypropyltrimethoxysilane, and γ-hydroxypropyltriethoxysilane. When the silane-coupling agent, which is not an essential component in the present invention, is mixed, the amount of the silane-coupling agent

mixed is not particularly limited as long as it does not impair the effects of the present invention. The amount is preferably 0.01 parts by mass or more, and more preferably 0.1 part by mass or more, and preferably 10 parts by mass or less, and more preferably 5 parts by mass or less, relative to 100 parts by mass of the PAS resin (A). When the amount is within such a range, the resin composition has favorable moldability, especially releasability, and the mechanical strength of the molded article is enhanced. Therefore, this is preferred.

In addition to the aforementioned components, according to use applications, the PAS resin composition according to the embodiment can further contain as an optional component a synthetic resin (hereinafter sometimes simply referred to as synthetic resin) such as a polyester resin, a polyamide resin, a polyimide resin, a polyetherimide resin, a polycarbonate resin, a polyphenylene ether resin, a polysulfone resin, a polyether sulfone resin, a polyetherether ketone resin, a polyether ketone resin, a polyarylene resin, a polyethylene resin, a polypropylene resin, a polytetrafluoroethylene resin, a polydifluoroethylene resin, a polystyrene resin, an ABS resin, a phenol resin, a urethane resin, or a liquid crystal polymer, as appropriate. In the present invention, the synthetic resin is not an essential component. When the synthetic resin is mixed, the amount of the synthetic resin mixed is not particularly limited as long as it does not impair the effects of the present invention. The amount varies according to the purpose thereof, and cannot be generally defined. For example, the amount of the synthetic resin mixed in the resin composition according to the embodiment is within the range of 5 parts by mass or more and 15 parts by mass or less relative to 100 parts by mass of the PAS resin (A). In other words, the ratio by mass of the PAS resin (A) to the total amount of the PAS resin (A) and the synthetic resin is preferably 100/115 or more, and more preferably 100/105 or more.

Furthermore, the PAS resin composition according to the embodiment may contain as an optional component a commonly known additive such as a colorant, an antistat, an antioxidant, a heat-resistant stabilizer, an ultraviolet stabilizer, an ultraviolet absorber, a foaming agent, a flame retarder, a flame retardant promoter, an antirust agent, or a release agent (a metal salt or ester of fatty acid having 18 to 30 carbon atoms, including stearic acid or montanic acid, a polyolefin wax such as polyethylene, etc.), if necessary. The additive is not an essential component. The amount of the additive is preferably 0.01 parts by mass or more, and preferably 1,000 parts by mass or less, more preferably 100 parts by mass or less, and further preferably 10 parts by mass or less, relative to 100 parts by mass of the PAS resin (A). The amount of the additive may be appropriately adjusted according to a purpose and use application for use without impairing the effects of the present invention.

<Method for Producing PAS Resin Composition>

A method for producing the PAS resin composition according to the embodiment is a method for producing a PAS resin composition for laser welding including a step of mixing the PAS resin (A) and melt-kneading the PAS resin (A) at a temperature range equal to or higher than the melting point of the PAS resin (A), in which the weight average molecular weight of the PAS resin (A) is less than 40,000, and the linear growth rate of crystals of the PAS resin (A) is 10 μm/min or less. The method will be described in detail below.

The method for producing the PAS resin composition according to the embodiment includes a step of mixing the aforementioned essential components and melt-kneading the mixture at a temperature range equal to or higher than the melting point of the PAS resin (A). More specifically, the PAS resin composition of the present invention contains each of the essential components and if necessary, the other optional component. Examples of the method for producing the resin composition used in the present invention include, but not particularly limited to, a method in which the essential components and if necessary, the optional component are mixed and melt-kneaded, and specifically, are mixed uniformly under drying by a tumbler, a Henschel mixer, or the like, if necessary, and then supplied to a twin-screw extruder and melt-kneaded.

Melt-kneading can be performed under heating within a temperature range at which the resin temperature is equal to or higher than the melting point of the PAS resin (A), a temperature range at which the resin temperature is preferably equal to or higher than the melting point plus 10°C, and a temperature range at which the resin temperature is more preferably equal to or higher than the melting point plus 10°C or still more preferably equal to or higher than the melting point plus 20°C, and preferably equal to or lower than the melting point plus 100°C or still more preferably equal to or lower than the melting point plus 50°C.

From the viewpoint of dispersibility and productivity, it is preferable that a melt-kneader be a twin-screw kneading extruder. For example, it is preferable that melt-kneading be performed while the amount of resin component discharged is controlled within the range of 5 to 500 (kg/hr) and the screw rotational speed is controlled within the range of 50 to 500 (rpm) as appropriate, and it is further preferable that melt-kneading be performed under a condition in which the ratio (the amount/the rotational speed) is within the range of 0.02 to 5 (kg/hr/rpm). Each of the components may be added to the melt-kneader and mixed simultaneously or separately. For example, when the glass fibers (B) as the optional component among the components are added, it is preferable that the glass fibers (B) be supplied to the extruder from a side feeder of the twin-screw kneading extruder from the viewpoint of dispersibility. The side feeder is positioned such that the ratio of the distance between a resin-supplying portion (top feeder) of the extruder and the side feeder to

the full length of screw of the twin-screw kneading extruder is preferably 0.1 or more, and more preferably 0.3 or more. The ratio is preferably 0.9 or less, and more preferably 0.7 or less.

The PAS resin composition thus obtained by melt-kneading is a melt-kneaded mixture containing the essential components, and the optional component and a component derived from the optional component added, if necessary. Therefore, the PAS resin composition of the present invention has morphology in which the PAS resin (A) forms a continuous phase and the optional component forms a disperse phase. It is preferable that after the melt-kneading, a publicly known method be performed, for example, the PAS resin composition according to the embodiment in a melted state be extrusion molded into a strand shape and then processed in a form of pellet, chip, granule, powder, or the like, and if necessary, pre-dried within the temperature range of 100 to 150°C.

<Molded Article and Method for Producing Molded Article>

A PAS molded article according to the embodiment is formed by melt-molding the PAS resin composition. A method for producing the molded article according to the embodiment includes a step of melt-molding the PAS resin composition. Therefore, the molded article according to the embodiment has morphology in which the PAS resin (A) forms a continuous phase and the optional component is dispersed. Since the PAS resin composition has such morphology, a molded article that is excellent in resistance to fuel swelling and mechanical strength is obtained.

When the molded article according to the embodiment has a thickness of 0.6 mm, the molded article is characterized in that the transmittance of a laser beam with 980 nm measured with an ultraviolet-visible-near infrared spectrophotometer is 20% or more. When the molded article having the aforementioned thickness transmits 20% or more of a laser beam, the molded article is recognized to have excellent laser transmissivity, and exhibits favorable adhesion strength even when a laser strength and an irradiation time are decreased. Therefore, the generation of black spots that become laser absorption points can be suppressed. The transmittance can be measured, for example, by a method described in Examples.

The PAS resin composition according to the embodiment may be subjected to various types of molding, such as injection molding, compression molding, composite, sheet, or pipe extrusion molding, drawing molding, blow molding, and transfer molding, and is particularly suitable for application of injection molding. Under molding by injection molding, each molding condition is not particularly limited. The PAS resin composition can be molded usually by a general method. For example, after the step of melting the PAS resin composition in an injection molding machine such that the resin temperature is equal to or higher than the melting point of the PAS resin (A), preferably equal to or higher than the melting point by 10°C, more preferably within the range of the melting point plus 10°C to the melting point plus 100°C, and further preferably within the range of the melting point plus 20°C to the melting point plus 50°C, the PAS resin composition may be injected into a mold from a resin discharge port and molded. In this case, the mold temperature may be set within a publicly known temperature range, for example, to room temperature (23°C) to 300°C, and preferably 130°C to 190°C.

The use application of the PAS resin molded article according to the embodiment is not particularly limited, and the PAS resin molded article can be used for various products. Since the PAS resin molded article has features such as excellent laser transmissivity and welding strength, the PAS resin molded article is particularly suitable for a part to be subjected to laser welding. In addition, the PAS molded article can be used for ordinary resin molded articles described below. Examples thereof include electrical and electronic parts typified by box-shaped protecting and supporting members for electrical and electronic part integrated modules, a plurality of separate semiconductors or modules, a sensor, a LED lamp, a connector, a socket, a resistor, a relay case, a switch, a coil bobbin, a capacitor, a variable capacitor case, a light pickup, an oscillator, various terminal plates, a transformer, a plug, a printed board, a tuner, a speaker, a microphone, a headphone, a compact motor, a magnetic head base, a power module, a terminal stand, a semiconductor, a liquid crystal, a FDD carriage, a FDD chassis, a motor brush holder, a parabola antenna, and a computer-related part; home or office electrical product parts typified by a VTR part, a television part, an iron, a hair dryer, a rice cooker part, a microwave oven part, an acoustic part, an audio apparatus part such as an audio laser disk, a compact disc, a DVD disk, and a blue ray disk, an illumination part, a refrigerator part, an air conditioner part, a typewriter part, a word processor part, and a part for an area using water such as a water heater and sensors for measuring the water amount and temperature in a bath; machine-related parts typified by an office computer-related part, a telephone-related part, a facsimile-related part, a copying machine-related part, a jig for cleaning, a motor part, a lighter, and a typewriter; optical instruments and precision machine-related parts typified by a microscope, a binocular, a camera, and a clock; and automobile and vehicle-related parts such as an alternator terminal, an alternator connector, a brush holder, a slip ring, an IC regulator, a potentiometer base for light dimmer, a relay block, an inhibitor switch, various valves such as an exhaust gas valve, various fuel-related, outlet, and inlet pipes, an air intake nozzle snorkel, an intake manifold, an engine cooling water joint, a carburetor main body, a carburetor spacer, an exhaust gas sensor, a cooling water sensor, a hot water temperature sensor, a brake pad wear sensor, a throttle positioner, a crankshaft positioner, a thermal sensor, an air flow meter, a brake pad wear sensor, an air conditioner thermostat base, a hot-air

flow control valve, a brush holder for a radiator motor, a water pump impeller, a turbine vane, a wiper motor-related part, a distributor, a starter switch, an ignition coil and a bobbin thereof, a motor insulator, a motor rotor, a motor core, a starter relay, a wire harness for transmission, a wind washer nozzle, an air conditioner panel switch board, a coil for a fuel-related electromagnetic valve, a fuse connector, a horn terminal, an electrical part insulation plate, a stepper motor rotor, a lamp socket, a lamp reflector, a lamp housing, a brake piston, a solenoid bobbin, an engine oil filter, and an ignition device case. The PAS resin molded article can be adopted in various use applications.

The PAS resin molded article according to the embodiment can be combined with another PAS resin molded article or a molded article of a resin other than the PAS resin by laser welding.

<Laser Welded Body and Method for Producing Laser Welded Body>

A laser welded body according to the embodiment is formed by laser-welding the PAS resin molded article. A method for producing a laser welded body according to the embodiment includes a step of laser-welding the PAS resin molded article.

Laser welding is a method in which a resin molded article that transmits a laser beam and a resin molded article that absorbs a laser beam are brought into contact with and welded with each other to join the resin members. More specifically, in this method, the molded article that absorbs a laser beam laminated on the molded article that transmits a laser beam is irradiated with a laser beam from a side of the molded article that transmits a laser beam under application of pressure (welding pressure) between the molded articles, to generate heat at the interface between the molded articles, and the resins are melted and welded.

In laser welding, an irradiation condition of a laser beam is not particularly limited, and can be appropriately adjusted according to the properties of used materials and the shapes of the molded articles. For example, conditions such as the wavelength and output power of a laser beam, scanning distance, a scanning speed, a welding pressure, an irradiation frequency, and an irradiation time can be adjusted. Examples of a laser beam source used in laser welding include a laser beam of a near infrared region, and particularly preferably a laser beam with a wavelength of 900 to 1,100 nm.

Examples

Hereinafter, the present invention will be described using Examples and Comparative Examples. However, the present invention is not limited to Examples. Hereinafter, "%" and "part(s)" are based on mass unless other specified.

<Examples 1 to 3 and Comparative Examples 1 and 2>

Materials were mixed in accordance with composition components and mixing amounts listed in Table 1. The materials were supplied to a twin-screw extruder with a vent "TEX30α (product name)" manufactured by The Japan Steel Works, Ltd., and melt-kneaded at a resin component discharge amount of 30 kg/hr, a screw rotation speed of 200 rpm, and a set resin temperature of 320°C, to obtain pellets of a resin composition. Glass fibers were supplied from a side feeder (S/T ratio: 0.5), and other materials were uniformly mixed in a tumbler in advance and then supplied from a top feeder. The obtained pellets of the resin composition were dried in a Geer oven at 140°C for 2 hours, and then injection-molded to produce various molded articles. The molded articles were subjected to the following tests.

<Evaluation>

(1) Measurement of Laser Transmittance

The obtained pellets were supplied to an injection molding apparatus (SE-75D-HP) manufactured by Sumitomo Heavy Industries, Ltd., in which a cylinder temperature was set to 320°C, and injection-molded using a molding mold in which the mold temperature was adjusted to 140°C, to obtain a sheet-like molded article having a length of 60 mm, a width of 60 mm, and a thickness of 0.6 mm of each of Examples and Comparative Examples. The transmittance (%) of each of the obtained molded articles was measured at a wavelength of 980 nm with an ultraviolet-visible-near infrared spectrophotometer "UV-3150" manufactured by Shimadzu Corporation. As a light source, a 50W halogen lamp was used. The results are shown in Table 1.

(2) Measurement of Laser Welding Strength

. Production of Welding Test Piece

A transmission-side test piece (60 mm in length, 60 mm in width, and 0.6 mm in thickness) and an absorption-side test piece (60 mm in length, 60 mm in width, and 1.0 mm in thickness) of each of Examples and Comparative Examples were obtained by the same operation as in (1). As shown in FIG. 1, the test pieces were welded in a T shape with a laser welding machine "EVO 1800" manufactured by Evosys Laser GmbH, to obtain a welding test piece. In welding, irradiation was performed three times with a laser beam having a laser wavelength of 980 nm, a laser strength of 120 W, and a scanning speed of 70 mm/s.

. Measurement of Welding Strength

The welding strength of the obtained welding test piece was measured with a table-top precision universal tester "Autograph AGS-X" manufactured by Shimadzu Corporation. In order to prevent the occurrence of rupture of a resin material earlier than rupture of a welded portion, an aluminum support plate having a slit at the center as shown in FIG. 2 was attached on the welding test piece as shown in FIG. 3. The welding test piece was pulled upward and downward at a test speed of 1 mm/min, and a welding strength (N) was measured. The results are shown in Table 1.

(3) Measurement of Linear Growth Rate of Crystals

0.5 g of each PPS resin was weighed on a preparation, and allowed to stand for 3 minutes on a hot plate at 350°C, to completely melt the resin, and the resin was covered with a cover glass and pressed. Subsequently, the temperature of the hot plate was changed to 250°C, and the resin was cooled at 600°C/min, and held at 250°C as it was. After production of crystals, the crystals were held at 250°C, and observed at a magnification of 40 with a polarized light microscope "OPTIPHOT-POL" manufactured by Nikon Corporation until 15 minutes elapsed, and the growth rate (μm/min) was calculated from the radius of the crystals every minute.

(4) Measurement of Weight Average Molecular Weight of Resin

The weight average molecular weight of the PPS resin was determined using gel permeation chromatography under the following measurement conditions. In calibration, 6 types of monodisperse polystyrenes were used.

Device: ultra-high temperature polymer molecular weight distribution analyzer ("SSC-7000" manufactured by Senshu Scientific Co., Ltd.)
Column: UT-805L (manufactured by Showa Denko K.K.)
Column temperature: 210°C
Solvent: 1-chloronaphthalene
Measurement method: UV detector (360 nm)

[Table 1]

| | | Example 1 | Example 2 | Example 3 | Comparative Example 1 | Comparative Example 2 |
|---|---|---|---|---|---|---|
| A-1 | parts by mass | 100 | | | | |
| A-2 | parts by mass | | 100 | 100 | | |
| a-3 | parts by mass | | | | 100 | 100 |
| B-1 | parts by mass | | | 67 | | 67 |

(continued)

| Evaluation | | | | | | |
|---|---|---|---|---|---|---|
| Transmittance | % | 35 | 25 | 21 | 18 | 17 |
| Welding strength | N | 380 | 340 | 330 | 280 | 250 |

. PAS component

PPS resin

A-1: weight average molecular weight: 29,000, linear growth rate of crystals: 3 um/min, melt viscosity (V6) 25 Pa·s
A-2: weight average molecular weight: 10,000, linear growth rate of crystals: 10 um/min, melt viscosity (V6) 5 Pa·s
a-3: weight average molecular weight: 8,000, linear growth rate of crystals: 13 um/min, melt viscosity (V6) 2 Pa·s

· Glass fibers

B-1: "T-717H" manufactured by Nippon Electric Glass Co., Ltd., fiber length: 3 mm, average diameter: 10 um

From Table 1, it is recognized that the molded articles formed from the resin compositions of Examples are excellent in laser transmission, and the laser welded bodies using the molded articles exhibit favorable welding strength.

## Claims

1. A polyarylene sulfide resin composition for laser welding comprising a polyarylene sulfide resin (A), wherein

   a weight average molecular weight of the polyarylene sulfide resin (A) is less than 40,000, and
   a linear growth rate of crystals of the polyarylene sulfide resin (A) is 10 μm/min or less.

2. The polyarylene sulfide resin composition for laser welding according to claim 1, further comprising glass fibers (B), wherein
   an amount of the glass fibers (B) mixed is 70 parts by mass or less relative to 100 parts by mass of the polyarylene sulfide resin (A).

3. The polyarylene sulfide resin composition for laser welding according to claim 1 or 2, wherein the polyarylene sulfide resin composition is a melt-kneaded product.

4. A molded article for laser welding obtained by melt-molding the polyarylene sulfide resin composition according to claim 1 or 2.

5. The molded article for laser welding according to claim 4, wherein a transmittance of a laser beam with 980 nm measured using an ultraviolet-visible-near-infrared spectrophotometer is 20% or more when the molded article has a thickness of 0.6 mm.

6. A laser welded body using the polyarylene sulfide resin molded article according to claim 4 or 5.

7. A method for producing a polyarylene sulfide resin composition for laser welding, the method comprising a step of mixing a polyarylene sulfide resin (A) and melt-kneading the polyarylene sulfide resin (A) at a temperature range equal to or higher than a melting point of the polyarylene sulfide resin (A), wherein
   a weight average molecular weight of the polyarylene sulfide resin (A) is less than 40,000, and a linear growth rate of crystals of the polyarylene sulfide resin (A) is 10 μm/min or less.

8. The method for producing a polyarylene sulfide resin composition for laser welding according to claim 7, the method

further comprising mixing glass fibers (B), wherein
an amount of the glass fibers (B) mixed is 40 parts by mass or less relative to 100 parts by mass of the polyarylene sulfide resin (A).

**9.** A method for producing a molded article for laser welding comprising a step of melt-molding a resin composition obtained by the method for producing a polyarylene sulfide resin composition according to claim 7 or 8.

**10.** A method for producing a laser welded body comprising a step of laser-welding a molded article obtained by the method according to claim 9.

[Fig. 1]

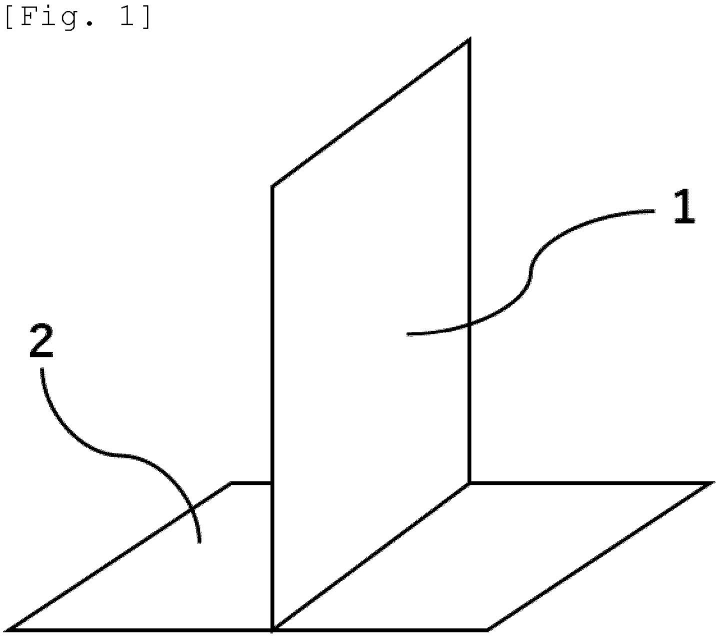


[Fig. 2]

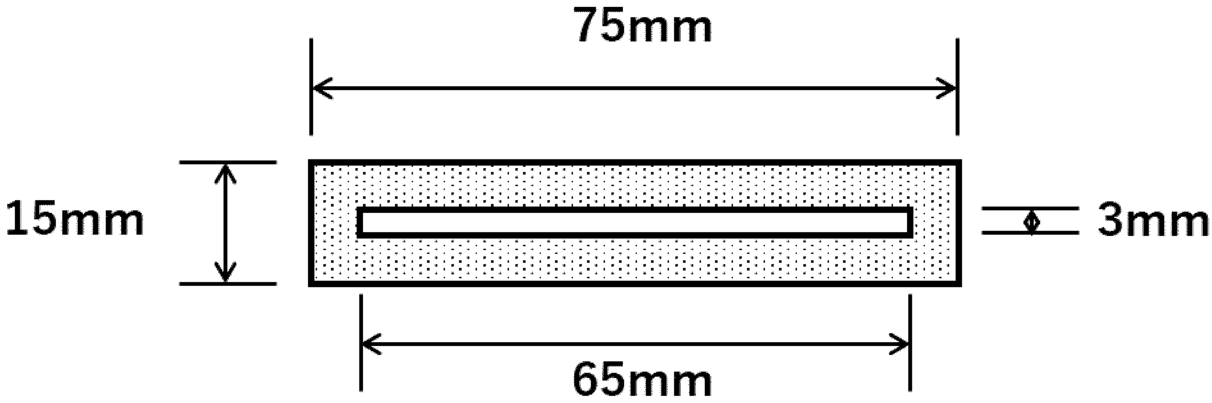

[Fig. 3]

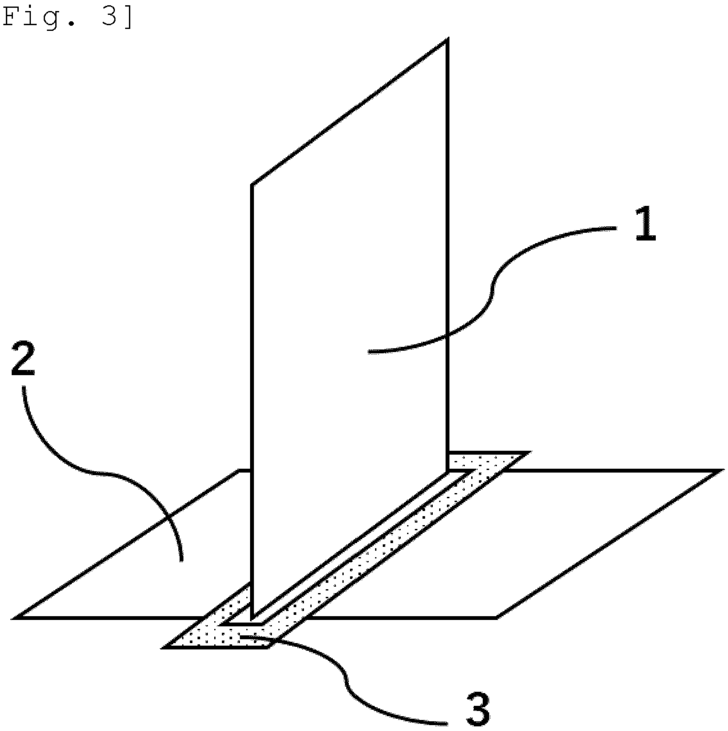

## INTERNATIONAL SEARCH REPORT

International application No.
**PCT/JP2022/043262**

**A. CLASSIFICATION OF SUBJECT MATTER**

***C08K 7/04***(2006.01)i; ***C08L 81/04***(2006.01)i; ***B29C 65/16***(2006.01)i
FI: B29C65/16; C08K7/04; C08L81/04

According to International Patent Classification (IPC) or to both national classification and IPC

**B. FIELDS SEARCHED**

Minimum documentation searched (classification system followed by classification symbols)

C08K7/04; C08L81/04; B29C65/16

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2003-128059 A (TORAY IND., INC.) 08 May 2003 (2003-05-08) paragraphs [0001], [0008], [0012], [0050], [0067], [0072], [0077] | 1-10 |
| A | JP 2002-235003 A (POLYPLASTICS CO.) 23 August 2002 (2002-08-23) entire text, all drawings | 1-10 |
| A | JP 2012-135884 A (TORAY IND., INC.) 19 July 2012 (2012-07-19) entire text, all drawings | 1-10 |
| A | JP 2005-336229 A (POLYPLASTICS CO.) 08 December 2005 (2005-12-08) entire text, all drawings | 1-10 |
| A | JP 2006-168221 A (DENSO CORP.) 29 June 2006 (2006-06-29) entire text, all drawings | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **13 December 2022** | **27 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/043262**

| Patent document cited in search report | Publication date (day/month/year) | Patent family member(s) | Publication date (day/month/year) |
|---|---|---|---|
| JP 2003-128059 A | 08 May 2003 | (Family: none) | |
| JP 2002-235003 A | 23 August 2002 | (Family: none) | |
| JP 2012-135884 A | 19 July 2012 | (Family: none) | |
| JP 2005-336229 A | 08 December 2005 | CN 1869124 A | |
| JP 2006-168221 A | 29 June 2006 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006168221 A
- WO 2010058713 A